**Europäisches Patentamt**

**European Patent Office**

(19)

**Office européen des brevets**

(11) Veröffentlichungsnummer: **0 157 249**
**B1**

(12) **EUROPÄISCHE PATENTSCHRIFT**

(45) Veröffentlichungstag der Patentschrift :
28.06.89

(51) Int. Cl.⁴ : **H 01 J 9/50,** C 09 K 11/01,
H 01 J 61/00, C 03 B 33/06

(21) Anmeldenummer : 85102935.5

(22) Anmeldetag : 14.03.85

(54) **Verfahren zur Rückgewinnung von Leuchtstoffen.**

(30) Priorität : 16.03.84 DE 3410989

(43) Veröffentlichungstag der Anmeldung :
09.10.85 Patentblatt 85/41

(45) Bekanntmachung des Hinweises auf die Patenterteilung : 28.06.89 Patentblatt 89/26

(84) Benannte Vertragsstaaten :
AT BE CH DE FR GB IT LI NL SE

(56) Entgegenhaltungen :
GB—A— 1 173 583
US—A— 3 523 904
SOVIET INVENTIONS ILLUSTRATED, Section Ch, Woche J 51, 9. Feber 1983. DERWENT PUBLICATIONS Ltd. London L 01

(73) Patentinhaber : **Patent-Treuhand-Gesellschaft für elektrische Glühlampen mbH**
**Hellabrunner Strasse 1**
**D-8000 München 90 (DE)**

(72) Erfinder : **Scherer, Volker, Dr.**
**Rudolfstrasse 14**
**D-8033 Planegg (DE)**
Erfinder : **Eger, Josef**
**Bachstrasse 30 c**
**D-8171 Bichl (DE)**
Erfinder : **Neukunft, Ernst, Dipl.-Ing.**
**Samfeldweg 18**
**D-8904 Friedberg (DE)**
Erfinder : **Vogel, Manfred, Dr.**
**Kemptener Strasse 73**
**D-8900 Augsburg (DE)**

**Beschreibung**

Die Erfindung betrifft ein Verfahren zur Rückgewinnung von Seltenerdoxid- und Seltenerdmischoxid-Leuchtstoffen von aus Leuchtstofflampen abgetrennten pulverförmigen Leuchtstoffgemischen gemäß dem Oberbegriff des Patentanspruchs.

Im Zeichen gestiegenen Energiebewußtseins werden heute mit Hilfe von kostspieligen Seltenerd-Leuchtstoffen Leuchtstofflampen mit geringerer Leistungsaufnahme und hoher Lichtausbeute geschaffen. Entsprechend den gesetzlichen Vorschriften handelt es sich bei ausgebrannten oder nicht funktionsfähigen Lampen dieser Art um Sondermüll, der eine spezielle Beseitigung erfordert. Im Zuge eines verstärkten Umweltbewußtseins sowie eines sparsamen Umgangs mit kostspieligen Rohstoffen ist es daher angebracht, solche Leuchtstofflampen nicht weiter einer Sondermülldeponie zuzuführen, sondern neben dem Quecksilber und dem Glas insbesondere das Leuchtstoffgemisch einer Wiederverwendung zuzuführen.

Um das Leuchtstoffgemisch abzusondern, werden zuerst die Enden des Entladungsgefäßes abgetrennt. Dann wird die Leuchtstoffbeschichtung und das Quecksilber mittels Druckluft aus dem Entladungsgefäß entfernt und das Leuchtstoffgemisch durch Gewebefilter sowie das Quecksilber durch Aktivkohle abgetrennt. Die Entfernung des Quecksilbers und der Leuchtstoffbeschichtung aus dem Entladungsgefäß mittels Druckluft hat sich als umweltfreundlichste Methode erwiesen, da hierbei — gegenüber Trennverfahren mit gasförmigen oder flüssigen Medien — keine zusätzlichen Abfallprodukte, wie z. B. Abwässer entstehen.

Das rückgewonnene pulverförmige Leuchtstoffgemisch besteht aus Seltenerdoxid- und Seltenerdmischoxidsowie evtl. aus Halophosphatleuchtstoffen.

Unter Seltenerdoxiden sind dabei Verbindungen zu verstehen, die neben dem Sauerstoff lediglich Seltenerdmetalle aufweisen, während Seltenerdmischoxide auch Metalle, die nicht unter die Seltenerdmetalle fallen, enthalten. Zur Auftrennung des Leuchtstoffgemisches gibt es laut Literatur verschiedene Aufschluß- bzw. Abtrennverfahren. Das Flotationsverfahren mit Chemikalien wurde aus wirtschaftlichen Gründen nicht weiterverfolgt. Auch Trennverfahren, die die Dichteunterschiede der Leuchtstoffgemischanteile ausnutzen, erwiesen sich als unbrauchbar, da die Leuchtstoffpartikel Agglomerate bilden und so eine exakte Dichtetrennung unmöglich machen.

Aus der GB-A-1 173 583 ist eine Methode zur Aufarbeitung von Seltenerd-Leuchtstoffen aus Fernsehbildröhren bekannt, wobei die Leuchtstoffe hier in Form einer Schlämpe, d. h. einer flüssigen Suspension vorliegen, und als Flüssigkeit Polyvinyl-Alkohol dient. Die Schlämpe enthält außerdem Dichromate sowie Chromate, die zur Photosensibilisierung dienen. Mit Hilfe von Salpetersäure werden die festen Leuchtstoffbestandteile gelöst und eine Seltenerd-Nitrat-Lösung erstellt. Anschließend wird durch Zugabe von Oxalsäure eine Ausfällung von Seltenerd-Oxalaten erreicht.

Aufgabe der Erfindung ist es, ein Verfahren zur Aufarbeitung von pulverförmigen Leuchtstoffgemischen aus Seltenerdoxid-, Seltenerdmischoxid- und evtl. Halophosphat-Leuchtstoffen zu schaffen, das eine optimale Rückgewinnung der Seltenerdoxid- und Seltenerdmischoxid-Leuchtstoffe gewährleistet.

Die Aufgabe wird durch die kennzeichnenden Merkmale des Patentanspruchs gelöst.

Versuche, das pulverförmige Leuchtstoffgemisch durch selektives Lösen mit Mineralsäuren zu trennen, zeigte den gewünschten Erfolg. Besonders gute Ergebnisse wurden dabei mit Salpetersäure erreicht.

Eine gute Lösung der Halophosphat-Leuchtstoffe und damit Abtrennung von den Seltenerd-Leuchtstoffen ergab sich durch Rühren des Leuchtstoffgemisches zusammen mit einer ein- bis zweinormalen Salpetersäure in einem Behälter über einen Zeitraum von mindestens 30 Minuten. Beste Löseergebnisse wurden bei Durchführung des Vorgangs bei Raumtemperatur erzielt.

Um sämtliche Spuren- und Bindemittelreste aus dem verbleibenden Leuchtstoffgemisch zu beseitigen, muß letzteres mindestens einmal in einem Behälter mit Wasser kurz gerührt und die überstehende Flüssigkeit nach einer Sedimentationszeit von mindestens 30 Minuten abgehebert werden. Eine optimale Beseitigung dieser Spuren- und Bindemittelreste wird, wie Versuche zeigten, erreicht, wenn man diesen Vorgang zweimal wiederholt, wobei die Sedimentationszeit jeweils zwischen 30 und 120 Minuten liegt.

Zur Abtrennung der verbleibenden Seltenerdoxid-Verbindungen, wie z. B. mit Europium aktiviertem Yttriumoxid, von den Seltenerdmischoxid-Verbindungen wird das verbleibende Leuchtstoffgemisch zusammen mit einer 4- bis 14-normalen Salpetersäure in einem Behälter mindestens 20 Minuten bei mindestens 90 °C gerührt. Um aus Sicherheitsgründen sowohl die Konzentration der Lösung möglichst niedrig zu halten als auch ein Kochen von konzentrierter Säure zu verhindern, hat sich folgendes Verfahren als optimal herausgestellt. Der Filterkuchen wird zuerst mit Wasser im Gewichtsverhältnis 5 Teile Wasser pro Teil Feststoff vermengt, dazu konzentrierte Salpetersäure im Verhältnis 2 l $HNO_3$ pro kg Feststoff gegeben und das Ganze sodann bei 90 bis 95 °C 30 Minuten gerührt. Anschließend wird zum quantitativen Lösen des Seltenerdoxid-Leuchtstoffes nochmals konzentrierte Salpetersäure im Verhältnis 1 l $HNO_3$ pro kg Feststoff gegeben und die Lösung weitere 30 Minuten auf Temperatur gehalten. Nach Abkühlung können durch Abfiltrieren, Waschen, Trocknen und Glühen aus dem Filterkuchen die Seltenerdmischoxid-Leuchtstoffe zurückgewonnen werden.

Das verbleibende Filtrat wird zur Ausfällung der Seltenerdoxid-Leuchtstoffkomponenten mit einem Fällungsreagenz versetzt, wobei sich als geeignetes Reagenz Oxalsäure erwiesen hat. Das Filtrat wird dazu in eine 40 bis 45 °C warme 10 %ige Oxalsäurelösung im Verhältnis 1,4 l pro l « Seltenerdmischoxid »-Lösung gegeben und 30 Minuten lang gerührt. Das gefällte Seltenerdmisch-Oxalat wird sodann abfiltriert, gewaschen, getrocknet und geglüht.

Das Verfahren ist anhand der nachfolgenden Figuren näher veranschaulicht.

Figur 1 zeigt ein Flußdiagramm zur Aufarbeitung von stabförmigen Leuchtstofflampen unter Rückgewinnung des Leuchtstoffmaterials, des Quecksilbers und des Glasrohrstoffes.

Figur 2 zeigt ein Flußdiagramm zur Aufarbeitung eines Leuchtstoffgemisches, bestehend aus einem oder mehreren Seltenerdoxid- und Seltenerdmischoxid-Leuchtstoffen sowie einem oder mehreren Halophosphatleuchtstoffen.

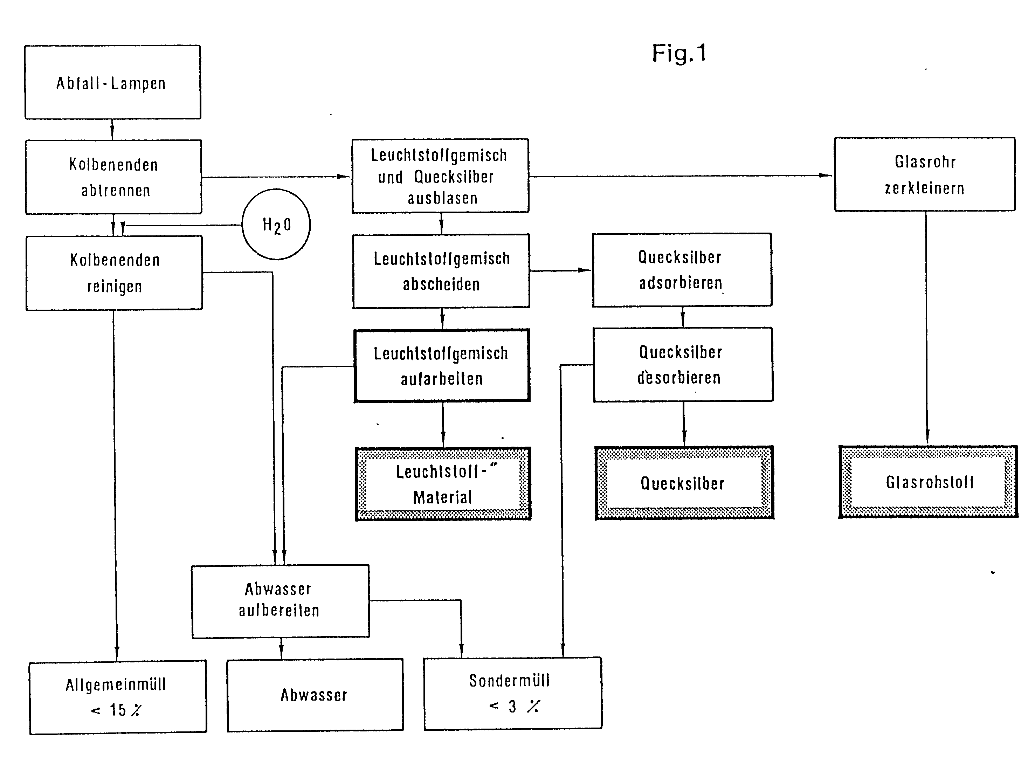

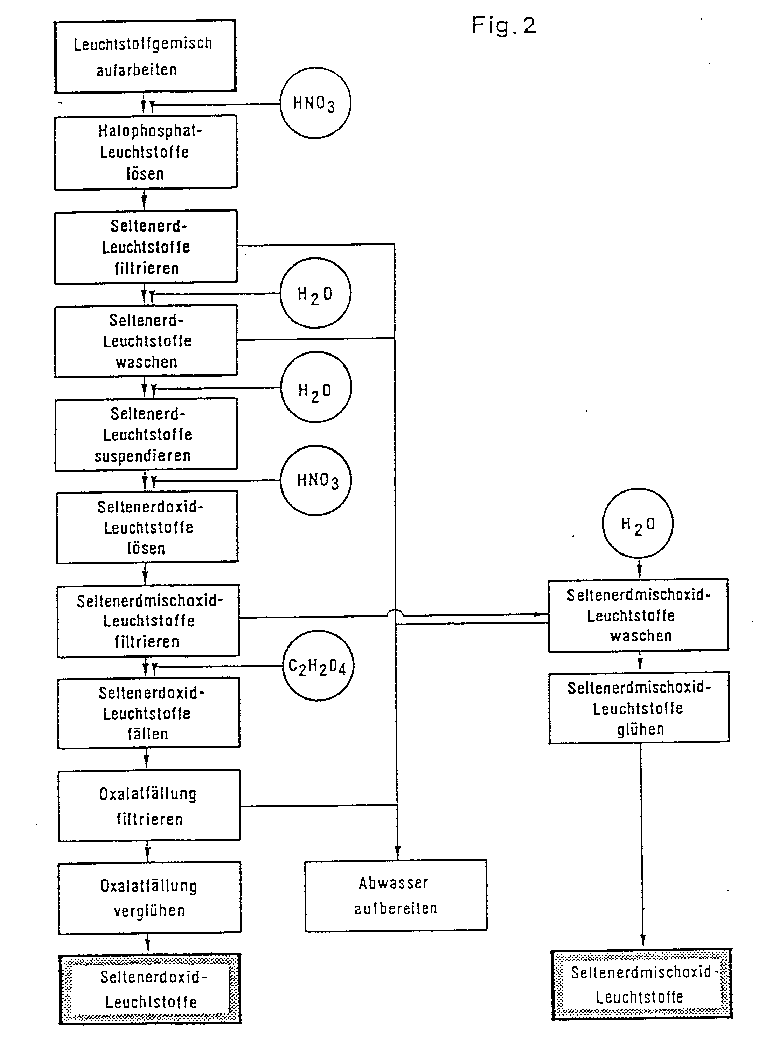

In Figur 1 ist ein Flußdiagramm zur Aufarbeitung von stabförmigen Abfall-Leuchtstofflampen dargestellt. Dabei wurde die Darstellung der Aufarbeitung eines Leuchtstoffgemisches aus Seltenerd- und Halophosphat-Leuchtstoffen herausgenommen und in einem getrennten Flußdiagramm in Figur 2 ausführlich dargestellt. Durch das Recycling der Leuchtstofflampen ergibt sich gegenüber einer Beseitigung von solchen Lampen als 100 % Sondermüll eine Reduzierung des Sondermülls auf kleiner 3 %. Darin ist der Sondermüll, der bei der Aufbereitung des Abwassers anfällt, enthalten. Der verbleibende Allgemeinabfall, der durch die nicht aufgearbeiteten, aber gereinigten Kolbenenden entsteht, beläuft sich auf weniger als 15 %.

Durch ein solches Verfahren können ca. 95 % des Glases, mehr als 90 % der Seltenerdmischoxid-Leuchtstoffe und 80 % der Seltenerdoxid-Leuchtstoffe sowie des Quecksilbers zurückgewonnen werden. Das Verfahren ist anwendbar bei Leuchtstofflampen aller Längen mit 38, 26 und 16 mm Entladungsgefäßdurchmesser.

In Figur 2 ist ein Flußdiagramm zur Aufarbeitung eines Leuchtstoffgemisches aus Halophosphat-, Seltenerdoxid- und Seltenerdmischoxid-Leuchtstoffen bei Rückgewinnung der Seltenerdoxid- und Seltenerdmischoxid-Leuchtstoffe dargestellt. Eine Rückgewinnung von Halophosphat-Leuchtstoffen verbietet sich aus wirtschaftlichen Gründen ; das Filtrat mit den gelösten Halophosphat-Leuchtstoffen wird daher einer Neutralisation zugeführt.

Um zu sehen, inwieweit sich die Meßdaten von Leuchtstofflampen mit einer Leuchtstoffbeschichtung aus wiederaufgearbeiteten Leuchtstoffen von denen mit einer Leuchtstoffbeschichtung aus neuwertigen Leuchtstoffen unterscheiden, wurden hierzu Untersuchungen angestellt. Das aufzuarbeitende Leuchtstoffgemisch bestand aus mit Antimon und Mangan aktiviertem Calciumhalophosphat als Halophosphat-Leuchtstoff, mit Europium aktiviertem Yttriumoxid als Seltenerdoxid-Leuchtstoff und mit Europium aktiviertem Ba-Mg-Aluminat sowie mit Terbium aktiviertem Ce-Mg-Aluminat als Seltenerdmischoxid-Leuchtstoffe. Leuchtstofflampen mit einer Leuchtstoffbeschichtung aus diesen wiederaufgearbeiteten Aluminat-Leuchtstoffen zeigten dieselben Meßdaten wie Leuchtstofflampen mit einer Leuchtstoffbeschichtung aus neuwertigen Aluminat-Leuchtstoffen. Auch in Langzeitversuchen ergaben sich gleichwertige Daten, so daß diese rückgewonnenen Leuchtstoffe voll zur Herstellung neuer Leuchtstoffbeschichtungen herangezogen werden können.

## Patentanspruch

Verfahren zur Rückgewinnung von Seltenerdoxid- und Seltenerdmischoxid-Leuchtstoffen von aus Leuchtstofflampen abgetrennten pulverförmigen Leuchtstoffgemischen, die aus einem oder mehreren Seltenerdoxid- und Seltenerdmischoxid-Leuchtstoffen sowie ggf. aus einem oder mehreren Halophosphat-Leuchtstoffen bestehen, gekennzeichnet durch die folgenden Verfahrensschritte :

— das Leuchtstoffgemisch wird zur Lösung der Halophosphat-Leuchtstoffe zusammen mit einer ein- bis zwei-normalen Salpetersäure in einem Behälter mindestens 30 Minuten bei Raumtemperatur gerührt

— das verbleibende Leuchtstoffgemisch wird zur Beseitigung von Spuren- und Bindemittelresten mindestens einmal in einem Behälter mit Wasser kurz gerührt und die überstehende Flüssigkeit nach einer Sedimentationszeit von mindestens 30 Minuten abgehebert

— das verbleibende aus Seltenerdoxid- und Seltenerdmischoxid-Leuchtstoffen bestehende Leuchtstoffgemisch wird zur Lösung der Seltenerdoxid-Leuchtstoffe zusammen mit einer 4- bis 14-normalen Salpetersäure in einem Behälter mindestens 20 Minuten bei mindestens 90 °C gerührt

— das verbleibende Filtrat wird zur Ausfällung der Seltenerdoxid-Leuchtstoffe zusammen mit einer 10 %igen Oxalsäurelösung in einem Behälter 15 bis 60 Minuten bei 40 bis 45 °C gerührt.

## Claim

Process for the recovery of rare earth oxide- and rare earth mixed oxide-fluorescent materials from powdery fluorescent material mixtures which are separated from fluorescent lamps and which comprise one or more rare earth oxide- and rare earth mixed oxide-fluorescent materials and where appropriate one or more halophosphate-fluorescent materials, characterised by the following steps :

— for the dissolution of the halophosphate-fluorescent materials, the fluorescent material mixture is mixed with a 1 to 2-normal nitric acid in a container for at least 30 minutes at room temperature

— to eliminate trace- and bonding agent-residues, the remaining fluorescent material mixture is briefly mixed with water in a container at least once and the supernatant liquid is syphoned off after a sedimentation time of at least 30 minutes

— the remaining fluorescent material mixture comprising rare earth oxide- and rare earth mixed oxide-fluorescent materials is mixed with a 4 to 14-normal nitric acid in a container for at least 20 minutes at a temperature of at least 90 °C in order to dissolve the rare earth oxide-fluorescent materials

— for the precipitation of the rare earth oxide-fluorescent materials, the remaining filtrate is mixed with a 10 % oxalic acid solution in a container for 15 to 60 minutes at a temperature of 40 to 45 °C.

**Revendication**

Procédé de récupération de substances fluorescentes à base d'oxydes de terres rares et de substances fluorescentes à base d'oxydes mixtes de terres rares, de mélanges de substances fluorescentes pulvérulents, qui sont séparés de lampes fluorescentes et qui sont constitués d'une ou de plusieurs substances fluorescentes à base d'oxydes de terres rares et à base d'oxydes mixtes de terres rares ainsi que, le cas échéant, d'une ou de plusieurs substances fluorescentes à base d'halophosphate, caractérisé par les phases opératoires suivantes :

— le mélange de substances fluorescentes est, pour dissoudre la substance fluorescente à base d'halophosphate, brassé avec de l'acide nitrique une fois à deux fois normal, dans un récipient pendant au moins 30 minutes à la température ambiante,

— le mélange résiduel de substances fluorescentes est, pour éliminer des traces et des restes d'agent liant, brassé brièvement au moins une fois dans un récipient avec de l'eau et le liquide surnageant est jeté après une durée de sédimentation d'au moins 30 minutes,

— le mélange résiduel de substances fluorescentes, constitué de substances fluorescentes à base d'oxydes de terres rares et de substances fluorescentes à base d'oxydes mixtes de terres rares, est, pour dissoudre les substances fluorescentes à base d'oxydes de terres rares, brassé avec de l'acide nitrique 4 fois à 14 fois normal, dans un récipient pendant au moins 20 minutes à au moins 90 °C,

— le filtrat restant est, pour précipiter les substances fluorescentes à base d'oxydes de terres rares, brassé avec une solution d'acide oxalique à 10 % dans un récipient pendant 15 à 60 minutes entre 40 et 45 °C.

Fig.1

Abfall-Lampen

Kolbenenden abtrennen

H₂O

Kolbenenden reinigen

Leuchtstoffgemisch und Quecksilber ausblasen

Glasrohr zerkleinern

Leuchtstoffgemisch abscheiden

Quecksilber adsorbieren

Leuchtstoffgemisch aufarbeiten

Quecksilber desorbieren

Leuchtstoff-" Material

Quecksilber

Glasrohstoff

Abwasser aufbereiten

Allgemeinmüll < 15 %

Abwasser

Sondermüll < 3 %

EP 0 157 249 B1

Fig. 2

```
┌─────────────────────┐
│ Leuchtstoffgemisch  │
│ aufarbeiten         │
└─────────────────────┘
         │         ◯ HNO₃
┌─────────────────────┐
│ Halophosphat-       │
│ Leuchtstoffe        │
│ lösen               │
└─────────────────────┘
         │
┌─────────────────────┐
│ Seltenerd-          │
│ Leuchtstoffe        │
│ filtrieren          │
└─────────────────────┘
         │         ◯ H₂O
┌─────────────────────┐
│ Seltenerd-          │
│ Leuchtstoffe        │
│ waschen             │
└─────────────────────┘
         │         ◯ H₂O
┌─────────────────────┐
│ Seltenerd-          │
│ Leuchtstoffe        │
│ suspendieren        │
└─────────────────────┘
         │         ◯ HNO₃
┌─────────────────────┐
│ Seltenerdoxid-      │
│ Leuchtstoffe        │
│ lösen               │
└─────────────────────┘
         │
┌─────────────────────┐
│ Seltenerdmischoxid- │
│ Leuchtstoffe        │
│ filtrieren          │
└─────────────────────┘
         │         ◯ C₂H₂O₄
┌─────────────────────┐
│ Seltenerdoxid-      │
│ Leuchtstoffe        │
│ fällen              │
└─────────────────────┘
         │
┌─────────────────────┐
│ Oxalatfällung       │
│ filtrieren          │
└─────────────────────┘
         │
┌─────────────────────┐
│ Oxalatfällung       │
│ verglühen           │
└─────────────────────┘
         │
┌─────────────────────┐
│ Seltenerdoxid-      │
│ Leuchtstoffe        │
└─────────────────────┘
```

```
┌─────────────────────┐
│ Abwasser            │
│ aufbereiten         │
└─────────────────────┘
```

◯ H₂O

```
┌─────────────────────┐
│ Seltenerdmischoxid- │
│ Leuchtstoffe        │
│ waschen             │
└─────────────────────┘
         │
┌─────────────────────┐
│ Seltenerdmischoxid- │
│ Leuchtstoffe        │
│ glühen              │
└─────────────────────┘
         │
┌─────────────────────┐
│ Seltenerdmischoxid- │
│ Leuchtstoffe        │
└─────────────────────┘
```